# EUROPEAN PATENT APPLICATION

(11) **EP 2 107 535 A1**
(43) Date of publication of application: **07.10.2009**
(21) Application number: 09157262.8
(22) Date of filing: 03.04.2009
(51) Int. Cl.: G07F 7/08, G06Q 20/00

(54) **Method and system for transferring resources between user terminals**

(30) Priority: 03.04.2008 ES 200800934
(71) Applicant: Vodafone Group PLC, Newbury Berkshire RG14 2FN (GB)
(72) Inventor: Touset Rios, Miguel Angel, 28108 Alcobendas (Madrid) (ES); Cajigas Bringas, Guillermo, 28108 Alcobendas (Madrid) (ES); Sendra Alcina, José Carlos, 28108 Alcobendas (Madrid) (ES)
(74) Representative: Carpintero Lopez, Francisco

(57) **Abstract**

The resource transfer from a first user terminal to a second user terminal comprises:
- authenticating the first terminal by providing a first user identifier in a wireless communication network;
- requesting a resource by the first user from a resource server accessible through the network;
- generating a first unique identifier for the resource and associating it with an economic value;
- requesting access by the resource server to a user account identified by the first user identifier and update it by using the economic value;
- sending the first unique identifier to the first terminal;
- requesting transfer of the resource from the first user to the second one, directly or through the resource server;
- sending a final, the first or a second one, unique identifier of the resource to the second terminal in order to enable it to use the resource.

The resource server associates the current unique identifier of the resource with the current user or a state of validity.

A payment service is defined on these steps dealing with three possible money states: e-money, cash and an intermediate new one, here called e-cash.

## Description

### TECHNICAL FIELD OF THE INVENTION

The present invention has its application within the telecommunications sector and, especially, in the industrial area engaged in providing cellular telephone systems with secure electronic transactions of data. More particularly, the invention described herein relates to the secure transfer of electronically exchangeable and payable resources.

### BACKGROUND OF THE INVENTION

The emerging market economies are cash-based and there is currently a plurality of electronic money service companies. Electronic money (also known as e-money, electronic cash, electronic currency, digital money, digital cash or digital currency) refers to money or scrip which is exchanged only electronically. To name but a few, some examples of such payment solutions are: WebMoney, which is an online payment system for making secure transactions through web clients and incorporating instant messaging to send out bills and extend credits; PayPal, an e-commerce business allowing payments and money transfers to be made through the Internet; Mobipay, which is capable of activating existing payment means, normal or virtual credit, debit or pre-paid cards, and allowing to carry out a variety of transactions through the mobile phone; M-PESA, is a mobile payment solution that enables customers to complete simple financial operations by mobile phone and specially aimed at mobile customers who do not have a bank account.

In all the existing payment solutions money may be only in any of these two states: cash or e-money.

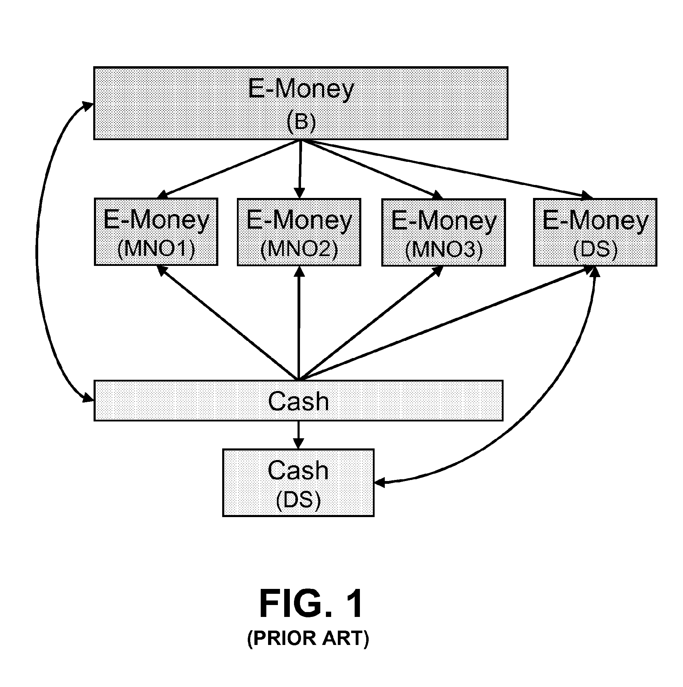

Figure 1 illustrates the management of the two possible states of money (e-money, cash) by diverse entities involved in financial operations, as virtually or electronically transactions and as real transactions in cash: banks (B), different mobile network operators (MNO1, MNO2, MNO3,...), department stores (DS), retailers, etc. The different mobile network operators and department stores carry out their mercantile transactions from customers with the bank entity using the e-money concept, which is directly translated into cash for paying to retailers or to be used in stores. The electronic money handled by banks can be retrieved as cash through their own facilities and ATMs.

Nonetheless, the current situation of most countries is that there are a high number of illiterates who only rely on perceptible money in contrast to e-money. Besides, because of emigration, there is a need of dealing with different currencies in originating and destination countries. But, there are many locations in the world nowadays where, although people is allowed to perform operations with e-money, they cannot find a cash dispenser or an automated teller machine (ATM) installed to dispense cash.

### SUMMARY OF THE INVENTION

The present invention serves to solve the aforesaid problem by including an intermediate state of money that can be referenced here as e-cash, in order to facilitate the transition between the two known states of money: e-money and cash. Then, money may be in any of these states:
- E-money, i.e. money which is sitting in a bank or mobile account.
- E-cash, i.e. e-money which is perceptible.
- Cash.

An amount of e-money can be rightly changed into e-cash and then it can be transferred as a whole packet or note to other user, or can be used directly for payment updating in that case the value of the e-cash which the user can deal with as from now, etc.

In this state of money called e-cash, the best of electronic and physical worlds is got: easiness of exchange and presence. E-cash can have a visible implementation in the display of a terminal, a debit/credit card or any other electronic device, favouring trust in the use of electronic money, particularly in the case of illiterate population.

More concretely, an aspect of the invention is a method for transferring payable and electronically exchangeable resources from a first user terminal to a second user terminal.

The first user terminal is charged, through a user account, for owning a transferable resource. That is, such resource has an economic value, which can be fixed (for example, the price or time cost of downloading a song or a film) or which can be variable (for example, dependent on the size of a file, on the duration of a song, etc.). Thus, the first user terminal preferably sends the service server information about the economic value of the resource or resources that the user of the first user terminal (the grantor) is allowed to transfer to a second one (the grantee). For this resource transfer, at least one unique identifier is generated and associated with the economic value of the resource to be transferred. Non-limiting examples of the economic value of resources are: a certain amount of money chargeable to the user account, a certain amount of points kept by the user of the first user terminal in his/her account and a certain amount of time (period of time, such as minutes or seconds, during which the user of the second user terminal is allowed to be the owner of the resource granted by the first user).

The transferable resource is in general subject to a quantifiable cost (measured in money, time, points...) and some examples of such resource is electronic money, a text file (e.g., a document), an audio file (e.g., a ringtone for mobiles), image file (e.g., wallpapers or screensavers, bidimensional codes such as MaxiCodes or bar codes, etc.) and a multimedia file (e.g., videos, mobile phone games, etc.).

An aspect of the invention refers to a method for transferring resources from a first user terminal to a second user terminal, wherein the first user terminal is authenticated with a first user identifier in a wireless communication network. According to this method, the first user terminal requests a resource from a resource server accessible through the wireless communication network. The resource server can be controlled by the same mobile network operator (MNO) which manages the user account server, but other possible scenarios are: the resource server and the user account server are controlled by different mobile network operators, or the resource server is controlled by an Internet service provider (ISP) with access through an open interface to the user account server provided by the mobile network operator controlling said user account server. In any case, the resource server is capable of communicating with the user account server and the user terminals.

Such resource server performs the following steps:
- generating at least a first unique identifier for a resource and associating said first unique identifier of the resource with an economic value;
- requesting access from the user account server which belongs to the wireless communication network, controlled by a certain MNO, to a user account identified by the first user identifier;
- updating the user account by using the economic value associated with the first unique identifier of the resource;
- sending the first unique identifier of the resource to the first user terminal;
- requesting transfer of the resource from the first user terminal to the second user terminal;
- sending to the second user terminal a final unique identifier of the resource in order to enable the second user to be the current owner of the resource and so to use said resource through the second user terminal; said final unique identifier can be the first unique identifier of the resource or a second one generated by the resource server depending on the preferred implementation of the invention.

In a possible preferred embodiment of the invention, the method further comprising, before the step of requesting transfer of the resource, a step of associating the first unique identifier of the resource with the first user identifier. This step of association is preferably performed by the resource server.

In another possible preferred embodiment of the invention, the method further comprising, before the step of requesting transfer of the resource, a step of associating the first unique identifier of the resource with a first state value that indicates enabling transfer of the resource to the second user terminal, This step of association, which can be combined with the association of the unique identifier of the resource and the user identifier previously described, is preferably performed by the resource server too.

For any of the possible implementations, the step of requesting transfer of the resource comprises sending from the first user terminal a second user identifier which identifies and allows communication with the second user terminal. The step of sending the first unique identifier of the resource from the first mobile terminal to the resource server can be carried out via messaging services -Short Message Service (SMS), Multimedia Messaging Service (MMS), Instant Messaging (IM), etc.-, Unstructured Supplementary Service Data (USSD), or an Internet access, for example.

If the association of the first unique identifier of the resource and the user identifier is implemented in the resource server, when the resource is required to be transferred from the first user terminal to the second one, the resource server performs the following step: disassociating the first unique identifier of the resource from the first user identifier and associating said first unique identifier of the resource with the second user identifier. Before the step of disassociation, the step of requesting transfer of the resource comprises the step of sending the first unique identifier of the resource from the first user terminal to the resource server. And before the steps of disassociating the first unique identifier from the first user identifier and associating said unique identifier of the resource with the second user identifier, the step of requesting transfer of the resource further comprises a step of sending from the first user terminal to the second user terminal the first unique identifier of the resource. This step of sending from the first user terminal to the second terminal the first unique identifier, and in addition optionally the economic value associated with said unique identifier of the resource, can be carried out via messaging services such as MMS or SMS, or by short-range wireless communication technologies such as Near Field Communication (NFC), Bluetooth, ZigBee, or Wifi, for example.

After sending from the first user terminal to the second user terminal the first unique identifier of the resource, and optionally an indication of its economic value, in order to get a direct transfer of the resource, the method carries out a step of validating said unique identifier of the resource sent from the first user terminal. This step of validation is performed preferably by the resource server. By validating the resource with the indicated associated economic value and identified with the first unique identifier delivered by the first user terminal, counterfeit or fraudulent actions are avoided, because if said first unique identifier of the resource is validated no more copies of the same resource (e.g., an e-cash note) can be sent or transferred to other user terminals indiscriminately using the same first unique identifier.

The step of validating the identifier associated with the resource comprises sending:
- said unique identifier of the resource (sent by the first user terminal) and the second user identifier (and optionally the first user identifier, originally associated with the first unique identifier of the resource), from the second user terminal to the resource server;
- a notification of the disassociation performed and sent by the resource server, notifying the first unique identifier of the resource is not assigned further to the first user identifier, this notification being sent to the first user terminal;
- an acknowledgment of the previous disassociation, sent from the resource server to the second user terminal and, in addition optionally, a notification of the association of the first unique identifier with the second user identifier performed by the resource server.

The final unique identifier of the resource sent to the second user terminal is the unique identifier of the resource finally associated with the second user identifier. In the particular embodiment of the invention, wherein the unique identifier of the resource is associated with a user identifier, the final unique identifier is preferably the first unique identifier. But also, another possibility for this embodiment is to use a second unique identifier generated and associated with the second user identifier by the resource server, so then the final unique identifier sent to the second user terminal is said second unique identifier of the resource.

In another embodiment of the invention, wherein the unique identifier of the resource is associated with a state value indicating its validity, the final unique identifier of the resource sent to the second user terminal is preferably a second unique identifier generated by the resource server and, in this embodiment, the step of requesting transfer of the resource further comprises the following steps:
- disassociating the first unique identifier of the resource from the first state value,
- generating a second unique identifier for the resource and associating it with the same economic value associated with the first unique identifier;
- associating the first unique identifier with a second state value that indicates the first user is not allowed to transfer the resource using the same first unique identifier ever more or temporally,
- associating the generated second unique identifier with the first state value, which indicates enabling transfer of the resource to the second user terminal.

Before the step of disassociation, the first user terminal sends the first unique identifier of the resource to the resource server and an indication of the economic value associated with said first unique identifier to the second user terminal in case that a direct resource transfer is implemented. In this case, the first unique identifier of the resource is submitted to be validated. The step of validating the identifier of the resource that the first user terminal wants to transfer is performed by the resource server in a preferred implementation of the invention.

Additionally, the step of requesting transfer of the resource can comprise sending from the first user terminal (the grantor of the resource) a second user identifier for communicating with the second user terminal (the grantee of the resource) through the wireless communication network.

The step of validation performed by the resource server comprises the following steps:
- sending from the second user terminal to the resource server the first unique identifier (delivered by the first user terminal), and the second user identifier (and optionally the identifier of the user of said first user terminal, that is, the first user identifier);
- sending from the resource server to the first user terminal a notification of the disassociation of the first unique identifier of the resource from the first state value, and optionally this involves generating an invalidation message indicating the first user terminal is disabled to use the first unique identifier at least temporally and said first unique identifier is "invalid";
- sending from the resource server to the second user terminal an acknowledgment of the disassociation of the first unique identifier from the first state value.

The second unique identifier is associated with the first state value, which indicates said second unique identifier is "valid" and so that the second user terminal can use it, meaning its user identified by the second user identifier is the current owner of the resource.

Another aspect of the invention is related to a system for transferring resources between user terminals, which implements using a wireless communication network the method described above. The system comprises a resource server having means for:
- communicating with at least a first and a second user terminals;
- communicating with a user account server of the wireless communication network, in which the first user terminal is authenticated and the user account server allows the resource server to access to a user account identified by a first user identifier delivered by the first user terminal;
- generating at least a first unique identifier for a resource and associating said at least one first unique identifier of the resource with an economic value;
- requesting update of the user account from the user account server by using the economic value;
- sending the first unique identifier of the resource to the first user terminal and for a final unique identifier of the resource, which can be the first unique identifier or another second unique identifier generated by this resource server, to the second user terminal in order to enable it to owns and makes use of the resource.

The first user terminal and the second user terminal can be portable or fixed terminals. Examples of a user portable terminal is a mobile phone, including as smartphones as 2G terminals, a laptop or a PDA. But any of said first and second user terminals can be fixed consisting of, for example, a cash dispenser (ATM) or any other payable product or service dispenser, which incorporates means for communicating with the wireless network and the resource server of the system described. Another example of user fixed terminal can be a mailbox configured to receive electronically transferable contents.

The proposed method and system for transferring resources between user terminals can be applied when the transferable resource is electronic money as a payment service that provides users with e-cash for a required amount of money: A first user can deposit the required amount of money in his mobile or bank account and when this user needs money (e.g., to make a transaction or go shopping), the proposed method allows said first user to ask for the amount of money he needs through the first user's terminal (e.g., his mobile, PDA, etc.). This method facilitates the use of e-cash for the given amount of money in order to, for instance, the change of e-cash into e-money or cash as well. The latter case can be implemented by means of other devices such as automated teller machines (ATMs).

The target markets identified for this service are: banks, chains of shops (e.g., supermarkets), retailers, and general population, in particular, illiterates.

There are a number of other applications which can directly benefit from the method and system described above:
- For providing users who need cash with e-cash money to make any payment in situations in which there are not available ATMs near the users.
- For shops which let users pay showing a bar code included in the picture of an e-cash note. In fact, this bar code can be read as any other buyable product. After payments the e-cash can be visually updated to the remaining money that the user can spend.
- For chains of shops which want to promote the use of their own currencies, e.g. for repayments.
- For retailers which want to save money avoiding high credit card transaction fees.
- For recharging debit cards by downloading e-money from a mobile terminal or a bank account. The current balances of the debit cards can be displayed in the mobile terminal.
- For exchanging or updating e-cash of foreign money to the currency of the country where the user is located.

The advantages of the present invention will become apparent in the description below but the main benefits can be summarized as follows:
- As a payment service, it increases confidence and improves perception of e-money by translating it into visually perceptible e-cash (e.g., displayable as a note or as a credit card) without requiring authentication from the user (the needed authentication step is performed by the resource server transparently to the user);
- It is a driver for other payment services (for instance, an e-cash money validator to grant that the displayed e-cash note is unique, storage of e-cash against robbery in the mobile network operator facilities, and secure transference of lottery and tickets like ticket restaurants for example), allowing the mobile network operators to compete with Visa in order to provide low transaction fees to retailers and allowing retailers and chains of shops to use their own currency, e.g. for repayments, and to have low transaction fees;
- No need to implement and maintain any ATMs network by banks;
- Currency brokers will have access to a new market segment and facilitate e-cash currency exchange.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a block diagram of the states of money used by financial transaction entities, in accordance with the states of money known in prior art.
Figure 2. - It shows a block diagram of the states of money used by financial transaction entities, in accordance with a preferred embodiment of the invention.
Figure 3. - It shows a schematic representation of a system for transferring resources from a mobile user terminal, in accordance with a possible embodiment of the invention and at an initialization stage wherein a unique identifier of the resource is associated with a user identifier assigned to the mobile terminal in a wireless communication network.
Figure 4. - It shows a schematic representation of the system for transferring resources from a mobile terminal, shown in Figure 3, in accordance with a possible implementation illustrating the transfer of resources through the wireless communication network.
Figure 5. - It shows a schematic representation of the system for transferring resources from a mobile terminal, shown in Figure 3, in accordance with another possible implementation illustrating the transfer of resources directly from the mobile terminal to another mobile user terminal.
Figure 6. - It shows a schematic representation of a system for transferring resources from a mobile user terminal, in accordance with a further possible embodiment of the invention and at an initialization stage wherein a unique identifier of the resource is associated with a state value indicating the availability to transfer the resource.
Figure 7. - It shows a schematic representation of the system for transferring resources from a mobile terminal, shown in Figure 6, in accordance with a possible implementation illustrating the transfer of resources through the wireless communication network.
Figure 8. - It shows a schematic representation of the system for transferring resources from a mobile terminal, shown in Figure 6, in accordance with another possible implementation illustrating the transfer of resources directly from the mobile terminal to another mobile user terminal.

### DETAILED DESCRIPTION OF THE INVENTION

The present invention proposes a method and a system, which in various preferred embodiments may be incorporated in wireless cellular networks (WLAN, WMAN) supporting 2G, 3G or beyond 3G wireless communications technologies (GSM, GPRS, EDGE, UMTS, HSPA, LTE, Wi-Fi, WiMAX,...).

A particular implementation of the invention as a payment service for transferring money is illustrated here, but other possible applications for other transferable resources (e.g., songs or films associated with a determined monetary, time or load cost) can be implemented. For the example of payment service, two different types of solutions are distinguished depending on the information used by the network to validate the authenticity of the transferred e-cash money and monitor its movement: those which match an e-cash identifier and its current owner, and those which make use of a validity state of e-cash. Also a third solution implementing a combination of these two ones is possible, using both the validity state of e-cash and the e-cash identifier, and optionally using the current owner of said e-cash for security and tracking functions.

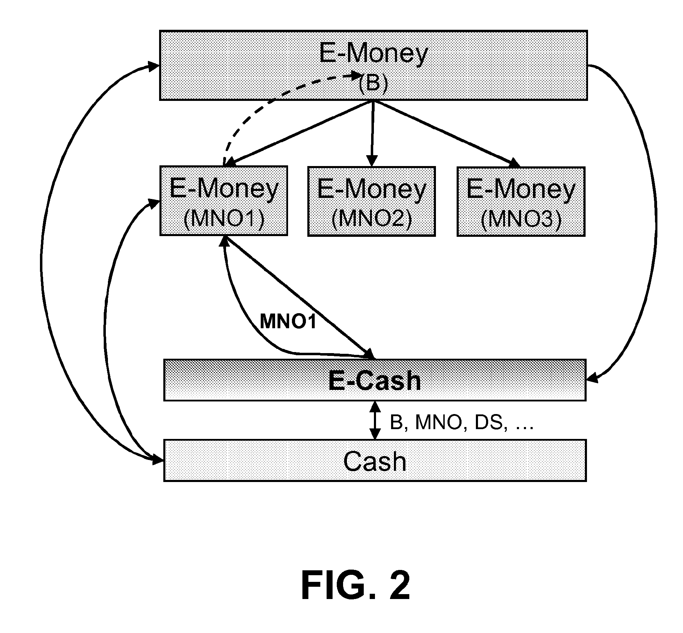

Figure 2 illustrates the three possible states of money which the present invention deals with: e-money, e-cash and cash. Banks (B) carry out secure transactions with different mobile network operators (MNO1, MN02, MNO3,...) providing payment services based on e-money. Users having user accounts in a mobile network operator (MNO1) are capable of asking for e-money, which prompts to provide them with e-cash. E-cash can be transferred to other users from said mobile network operator (MNO1) or users from another mobile network operator (MN02, MNO3,...), in order to allow them any payment operation not only payment for calling, and even they can retrieve it as cash from a bank through ATMs or other cash dispenser facilities, from shops of the mobile network operator (MNO1), department stores (DS) or retailers.

E-Cash state of money offers added value services for retailers with respect to competitive transaction fees and private currency for repayments or changes. Another added value service related to the perceptible character of e-cash is the possibility of implementing e-cash as an advertising channel,

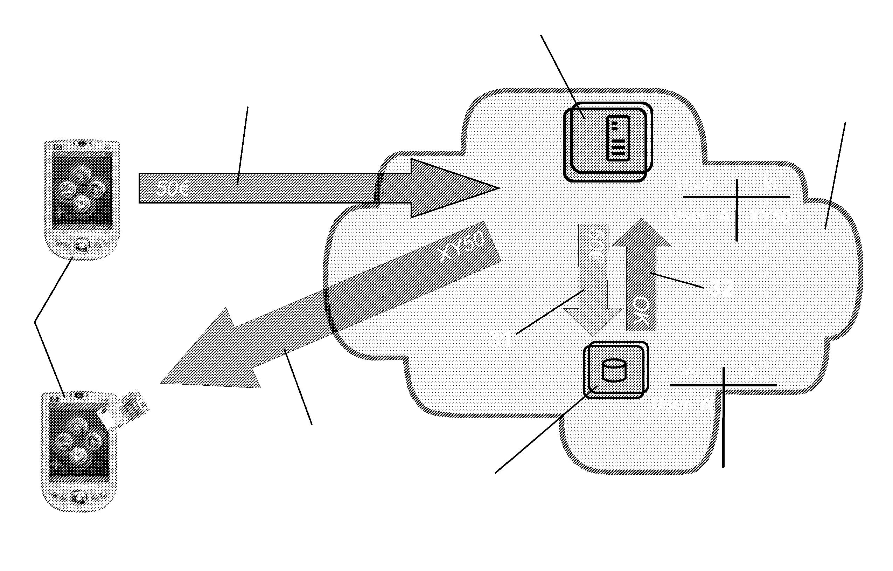

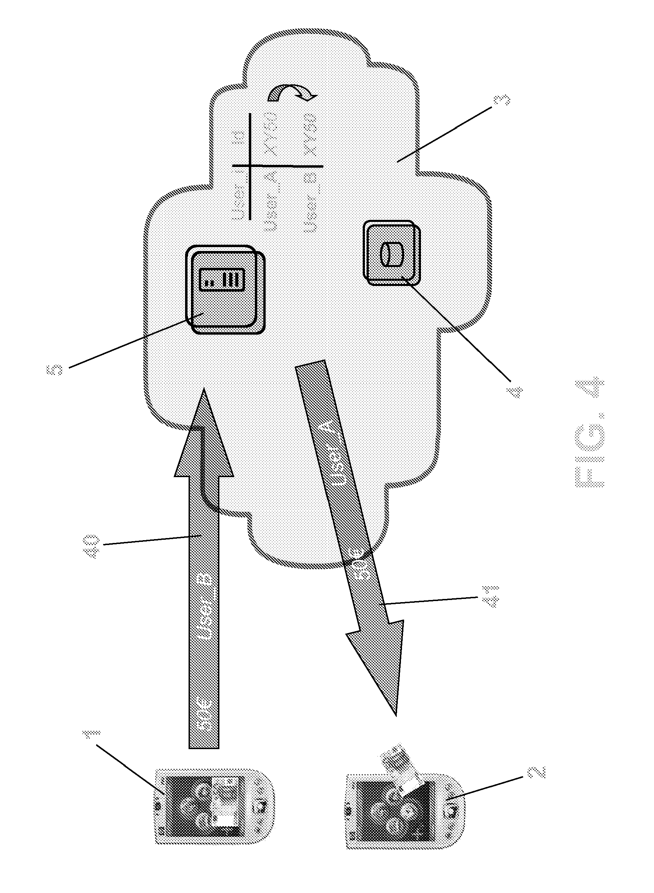

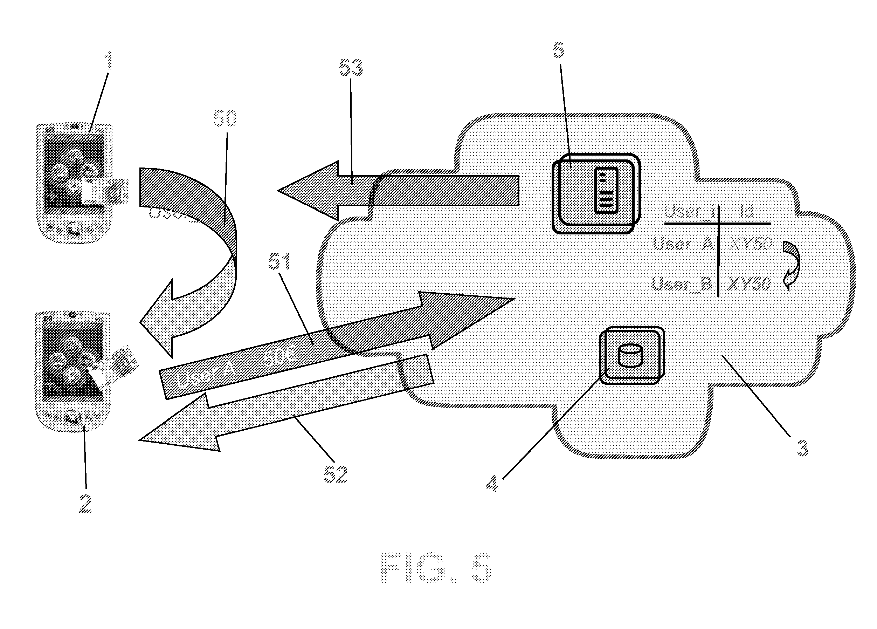

Figures 3-5 shows different phases in a first payment service solution for transferring resources, in this case money, between user terminals, which in this example consist of mobile phones, This first solution is based on matching or associating an e-cash identifier and the user who currently owns. Two possible embodiments, respectively shown in Figures 4 and 5, are in turn distinguished for providing this service in a system comprising a first user terminal (1) which has means for authenticating said first user terminal (1) with a first user identifier (user_A) in a wireless communication network (3) and means for communicating with a second user terminal (2). Figure 3 shows the initialization of this system.

Regarding Figure 3, the first user terminal (1) requests a resource, in this case an amount of money, from a resource server (5) accessible through the wireless communication network (3) by sending a message of withdrawal of e-cash (30), through an Internet access or USSD for example, message (30) which indicates the amount of money required to the resource server (5), for instance 50 € as depicted in Figure 3. Said resource server (5) comprises means for communicating with the first user terminal (1) and also means for communicating with a user account server (4) of the wireless communication network (3). Thus, the resource server (5) requests access (31) from the user account server (4) to a user account identified by the first user identifier (user_A) in order to update this user account with the indicated amount of money, as for example Figure 3 illustrates by subtracting 50 € from 200 € previously charged in the user account. Once the user account updating is performed, the user account server (4) sends an OK message (32) to the resource server (5) and, in turn, said resource server (5) generates a first unique identifier (XY50) of the resource, i.e., an identifier (Id) representing an e-cash note which is unique and avoids fraud, associates this first unique identifier (XY50) to the first user identifier (user_A) and sends it (33) to the first user terminal (1).

The step of requesting access from a user account server (4) of the wireless communication network (3) may involve generating a new user account or using an existing user account; in any case, the user account is identified and accessible by the first user identifier (user_A) which the first user terminal (1) provides the user account server (4) with. The first user identifier (user_A) and the first unique identifier (XY50) of the resource generated by the resource server (5) may be independent or another option is implementing in the resource server (5) a generation of the first unique identifier (XY50) which is related to the first user identifier (user_A), for example, the first unique identifier (XY50) is build by concatenating a unique number sequence to the first user identifier (user_A) or to a private key provided by the first user terminal (1).

In a possible embodiment of the proposed system for transferring resources, in this case money, between two user terminals, as illustrated in Figure 4, the resource transfer is performed through the network. The resource server (5) has the means for associating the first unique identifier (XY50) with the first user identifier (user_A) as well as for disassociating it from said first user identifier (user_A) so that subsequently said resource server (5) can associate the first unique identifier (XY50) of the resource with another user, with a second user identifier (user_B). Said association and disassociation of unique identifiers (Id) of the resource and user identifiers (User_I) are performed for example in a data table.

According to the embodiment of the invention represented in Figure 4, the first user terminal (1) sends to the resource server (5), within a message of transfer request (40) via Internet access, USSD or conventional messaging service like MMS, the second user identifier (user_B) for communicating with a second user terminal (2) and the first unique identifier (XY50) that corresponds univocally to the user's e-cash note of a given economic value, in this example 50 €. The resource server (5) carries out the disassociation of the first unique identifier (XY50) from the first user identifier (user_A) and associates said first unique identifier (XY50) with the second user identifier (user_B). Then, the resource server (5) sends to the second user terminal (2) a message of reply (41) with the first unique identifier (XY50) associated to the second user identifier (user_B), containing an indication of the monetary value, 50 €, transferred from the first user identifier (user_A) by the first user terminal (1).

An option of the proposed payment service can implement a gift cheque by sending, in addition to the first unique identifier (XY50) of the resource, the first user identifier (user_A), who gives the "gift", but no indication of the monetary value.

Optionally, the second user terminal (2) can require an special application to manage e-cash in a user friendly way. Such special application can be implemented by widgets or as a standalone application and sent transparently by the mobile network operator through the wireless communication network (3), e.g. via OTA -Over The Air-. Once loaded in the user terminal, the application allows the user to visualize the e-cash notes and store them in a file system of the terminal. Also, the application can verify automatically the validation of the transferred e-cash note and offers an interface with the wireless communication network (3) in some steps of the process such as the resource transfer request or the user authentication in the system to access the service.

Figure 5 shows another possible embodiment of the proposed system for transferring resources, in this case money, wherein the resource transfer is directly between the two user terminals. The first user terminal (1) sends a message of direct transfer request (50) to the second user terminal (2), instead of communicating with the resource server (5), through Internet, NFC or conventional messaging service between user terminals. This message (50) is to submit the user's e-cash note of a given economic value, in this example 50 € and associated with the first unique identifier (XY50), from the first user terminal (1) to the second user identifier (user_B) provided for communicating with the second user terminal (2). The resource server (5) comprises means for validating the user's e-cash note sent from the first user terminal (1) by checking the validity of the first unique identifier (XY50). For this purpose, a message of validation request (51) is sent to the resource server (5), manually or automatically by the aforementioned special application for managing e-cash, from the second user terminal (2), containing the second user identifier (user_B) and the first unique identifier (XY50). Once the corresponding disassociation and association of the first unique identifier (XY50) with the respective users identifiers (User_I) to change the current owner of the e-cash note are performed, the resource server (5) sends to the first user terminal (1) a notification of the disassociation of the first unique identifier (XY50) of the resource from the first user identifier (user_A) and to the second user terminal (2) an acknowledgment of the disassociation (52) of the first unique identifier (XY50) of the resource from the first user identifier (user_A). Additionally, the resource server (5) firstly checks the previous association of the first unique identifier (XY50) of the resource with the first user identifier (user_A) and, when secondly the disassociation is made, after that, the resource server (5) sends a message of invalidation (53) to the first user terminal (1) indicating said disassociation and the current association of the first unique identifier (XY50) of the resource with the second user identifier (user_B).

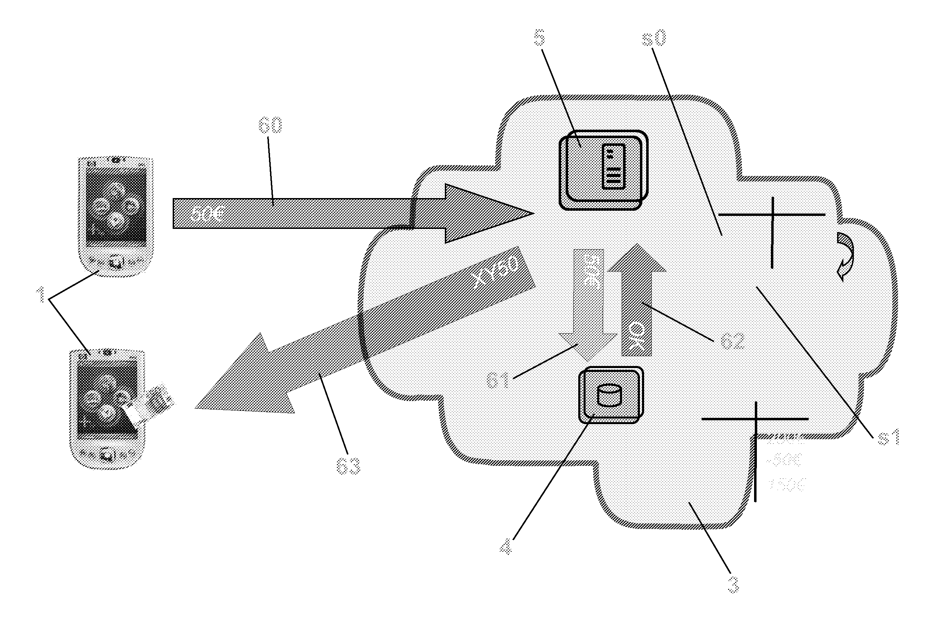

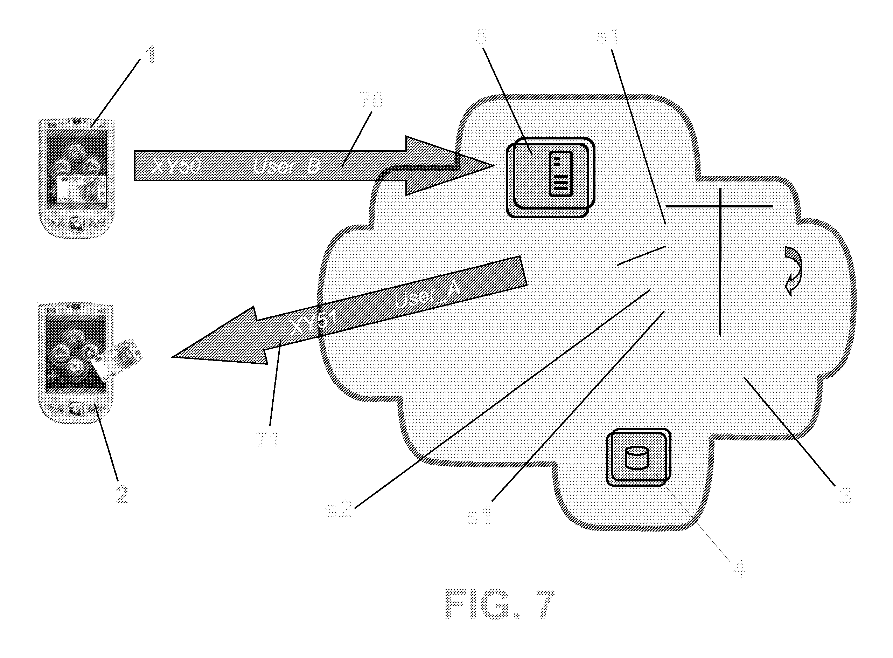

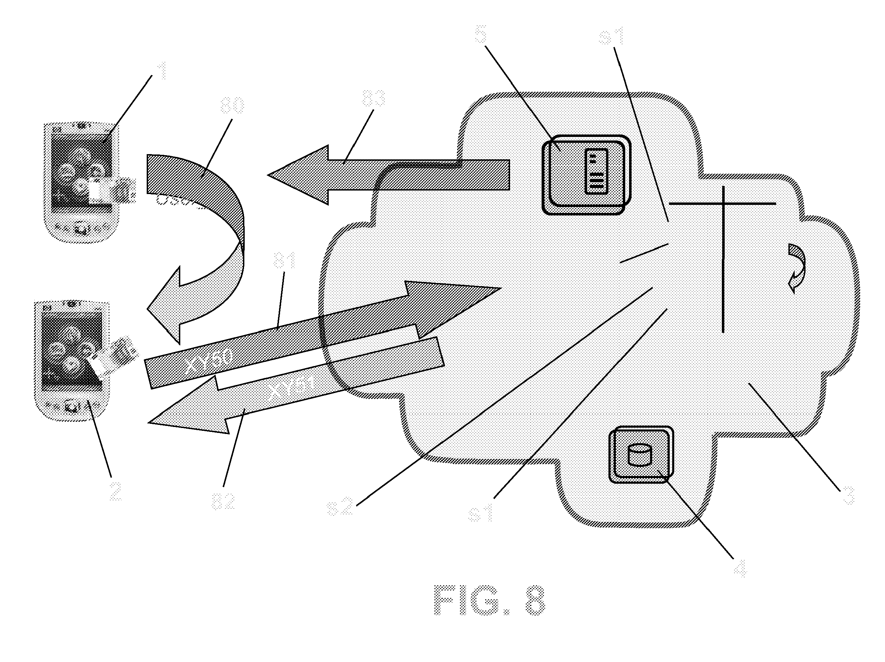

Figures 6-8 shows different phases in a second payment service solution for transferring resources, in this case money, between user terminals, which in this example consist of mobile phones, This second solution is based on matching or associating an identifier for the e-cash note and the state of e-cash which determines whether said e-cash note is valid or not. Two possible embodiments for providing this service are respectively shown in Figures 7 and 8, in a system comprising a first user terminal (1) which initiates the resource transfer and a second user terminal (2) to which the resource, for example 50 € note, is to be transferred. Figure 6 shows the initialization of this system.

For this alternative implementation of the service, the resource server (5) comprises means for associating the first unique identifier (XY50) of the resource, which has an initial state value (s0) indicating that said first unique identifier (XY50) is free -as shown in Figure 6-, with a first state value (s1), - "valid" in Figure 6-, which indicates enabling transfer of the resource to the second user terminal (2). The first user terminal (1) requests a 50€ note by sending a message of withdrawal of e-cash (60), through Internet or USSD for example. The resource server (5) requests access (61) from the user account server (4) to the user account identified by the first user identifier (user_A) in order to update this user account with the indicated amount of money, as for example Figure 6 illustrates by subtracting 50 € from 200 € previously charged in the user account. Once the user account updating is performed, the user account server (4) sends an OK message (62) to the resource server (5) and, in turn, said resource server (5) generates a first unique identifier (XY50) of the resource and sends it (63) to the first user terminal (1).

Figure 7 shows an implementation of the invention using the state of resource validation in case that the resource transfer is performed through the network, while Figure 8 shows another possible implementation in which the resource transfer is direct from the first user terminal (1) to the second user terminal (2).

The resource server (5) further comprises means for generating a second unique identifier (XY51) for the resource. In the solution represented in Figures 7-8, the resource server (5) disassociates the first unique identifier (XY50) of the resource from first state value (s1), "valid", and then associates the second unique identifier (XY51) of the resource with the "valid" state first state value (s1), while the first unique identifier (XY50) is associated with a second state value (s2) indicating that the use of the first unique identifier (XY50) is disabled at least temporally. The second state value (s2) which can be set to "free" or "invalid" as depicted in Figures 7 and 8.

For transferring the resource through the network, the first user terminal (1) sends to the resource server (5), within a message of transfer request (70) via Internet access, USSD or conventional messaging service like SMS, the first unique identifier (XY50) of the resource and an indication of the economic value associated with said first unique identifier (XY50), in this example 50 €. The first user terminal (1) further comprises means for sending a second user identifier (user_B) for communicating with the second user terminal (2). The resource server (5) carries out the disassociation and associations of the generated unique identifiers (Id) given to the 50€ e-cash note and the corresponding states (S) values: "free", "valid", "invalid". Then, the resource server (5) sends to the second user terminal (2) a message of reply (71) with the first unique identifier (XY50) associated to the second user identifier (user_B), containing an indication of the monetary value, 50 €, transferred from the first user identifier (user_A) by the first user terminal (1). Or alternatively, if a gift cheque is implemented, the message of reply (71) does not indicate the monetary value but contains the first user identifier (user_A). Optionally, the second user terminal (2) can have a special application loaded to manage e-cash in a user friendly way.

For getting direct transfer of the resource between the user terminals, as illustrated in Figure 8, the first user terminal (1) sends a message of direct transfer request (80) to the second user terminal (2), through an Internet access, short-range wireless communication link or conventional messaging service. This message (80) is to submit the user's e-cash note of a given economic value, in this example 50 € and associated with the first unique identifier (XY50), from the first user terminal (1) to the second user identifier (user_B). The resource server (5) comprises means for validating the user's e-cash note sent from the first user terminal (1) by checking the validity of the first unique identifier (XY50). For this purpose, a message of validation request (81) is sent to the resource server (5), manually or automatically by the aforementioned special application for managing e-cash, from the second user terminal (2), containing the second user identifier (user_B) and the first unique identifier (XY50) and optionally the first user identifier (user_A). The resource server carries out the corresponding disassociation and association of the first unique identifier (XY50) and the second unique identifier (XY51) with the respective states (S), to change the validity of the generated unique identifiers for each of the two users respectively: changing the state value from "valid" to "invalid" for the first unique identifier (XY50) and from "free" to "valid" for the second unique identifier (XY51). Hence, the resource server (5) sends to the first user terminal (1) a notification of the disassociation of the first unique identifier (XY50) from the first state value (s1), "valid", and to the second user terminal (2) an acknowledgment of the disassociation (82) of the first unique identifier (XY50). Additionally, the resource server (5) firstly checks the previous association of the first unique identifier (XY50) of the resource with the "valid" state and, when secondly the disassociation is made and the state value is changed to "invalid", the resource server (5) sends a invalidation message (83) to the first user terminal (1) indicating said disassociation, that is the first user terminal (1) is disabled to use the first unique identifier (XY50) for further transfer of the same e-cash note, and indicates the current validity of the second unique identifier (XY51) of the resource. With the acknowledgment of the disassociation (82), the resource server (5) sends the valid second unique identifier (XY51) to the second user terminal (2).

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

Some preferred embodiments of the invention are described in the dependent claims which are included next.

## Claims

1. Method for transferring resources from a first user terminal (1) to a second user terminal (2), **characterized by** comprising the steps of:
- authenticating the first user terminal (1) in a wireless communication network (3) by providing a first user identifier (user_A);
- requesting a resource by the first user terminal (1) from a resource server (5) accessible through the wireless communication network (3);
- generating a first unique identifier (XY50) for a resource and associating said first unique identifier of the resource with an economic value;
- requesting access by the resource server (5) from a user account server (4) of the wireless communication network (3) to a user account identified by the first user identifier (user_A);
- updating the user account by using the economic value associated with the first unique identifier (XY50) of the resource;
- sending the first unique identifier (XY50) of the resource to the first user terminal (1);
- requesting transfer of the resource from the first user terminal (1) to the second user terminal (2);
- sending to the second user terminal (2) a final unique identifier of the resource in order to enable said second user terminal to use the resource.

2. Method according to claim 1, further comprising a step of associating the first unique identifier (XY50) of the resource with the first user identifier (user_A), before the step of requesting transfer of the resource.

3. Method according to any previous claim, further comprising a step of associating the first unique identifier (XY50) of the resource with a first state value (s1), which indicates enabling transfer of the resource to the second user terminal (2), before the step of requesting transfer of the resource.

4. Method according to any previous claim, wherein the step of requesting transfer of the resource comprises sending from the first user terminal (1) a second user identifier (user_B) for communicating with the second user terminal (2) through the wireless communication network (3).

5. Method according to claim 2, wherein the step of requesting transfer of the resource further comprises a step of disassociating the first unique identifier (XY50) of the resource from the first user identifier (user_A)

6. Method according to claims 4 and 5, wherein the step of requesting transfer of the resource further comprises a step of associating the first unique identifier (XY50) of the resource with the second user identifier (user_B).

7. Method according to any of claims 4-6" wherein the step of requesting transfer of the resource further comprises a step of validating the first unique identifier (XY50) of the resource sent from the first user terminal (1), the step of validating comprising the following steps:
- sending from the second user terminal (2) to the resource server (5) the second user identifier (user_B) and the first unique identifier (XY50),
- sending from the resource server (5) to the first user terminal (1) a notification of the disassociation of the first unique identifier (XY50) of the resource from the first user identifier (user_A),
- sending from the resource server (5) to the second user terminal (2) an acknowledgment of the disassociation of the first unique identifier (XY50) of the resource from the first user identifier (user_A).

8. Method according to any of claims 5-7, wherein the final unique identifier of the resource sent to the second user terminal (2) is the first unique identifier (XY50) of the resource.

9. Method according to claim 3, wherein the step of requesting transfer of the resource further comprises the following steps:
- disassociating the first unique identifier (XY50) of the resource from the first state value (s1),
- generating a second unique identifier (XY51) for the resource and associating the second unique identifier (XY51) of the resource with the same economic value associated with the first unique identifier (XY50) of the resource;
- associating the first unique identifier (XY50) of the resource with a second state value (s2), which indicates disabling transfer of the resource at least temporally,
- associating the second unique identifier (XY51) of the resource with the first state value (s1), which indicates enabling transfer of the resource to the second user terminal (2).

10. Method according to claim 9, wherein the step of requesting transfer of the resource further comprises a step of validating the first unique identifier (XY50) of the resource sent from the first user terminal (1), the step of validating comprising the following steps:
- sending from the second user terminal (2) to the resource server (5) the second user identifier (user_B) and the first unique identifier (XY50),
- sending from the resource server (5) to the first user terminal (1) a notification of the disassociation of the first unique identifier (XY50) of the resource from the first state value (s1),
- sending from the resource server (5) to the second user terminal (2) an acknowledgment of the disassociation of the first unique identifier (XY50) of the resource from the first state value (s1).

11. Method according to any of claims 9-10, further comprising, after the step of associating the second unique identifier (XY51) of the resource with the first state value (s1), a step of sending to the first user terminal (1) an invalidation message which indicates that the first user terminal (1) is disabled to use the first unique identifier (XY50) of the resource.

12. Method according to any of claims 9-11, wherein the final unique identifier of the resource sent to the second user terminal (2) is the second unique identifier (XY51) of the resource.

13. System for transferring resources between user terminals, comprising a first user terminal (1) which has means for communicating with a second user terminal (2) and means for authenticating said first user terminal (1) in a wireless communication network (3) by providing a first user identifier (user_A), the system **characterized by** further comprising:
- a resource server (5) which comprises means for communicating with the first user terminal (1) and means for communicating with a user account server (4) of the wireless communication network (3) in which the first user terminal (1) is authenticated, the user account server (4) allowing the resource server (5) to access to a user account identified by the first user identifier (user_A); said resource server (5) further comprising means for generating at least a first unique identifier (XY50) for a resource and associating said first unique identifier of the resource with an economic value, means for requesting update of the user account from the user account server (4) by using the economic value associated with the first unique identifier (XY50) of the resource, means for sending the first unique identifier (XY50) of the resource to the first user terminal (1) and for sending to the second user terminal (2) a final unique identifier of the resource in order to enable said second user terminal (2) to use the resource.

14. System according to claim 13, wherein the resource server (5) further comprises means for associating and disassociating the first unique identifier (XY50) of the resource with respect to the first user identifier (user_A).

15. System according to claim 13, wherein the resource server (5) further comprises means for associating and disassociating the first unique identifier (XY50) of the resource with respect to a first state value (s1), which indicates enabling transfer of the resource to the second user terminal (2).
